# EUROPEAN PATENT APPLICATION

(11) **EP 4 369 443 A1**
(43) Date of publication of application: **15.05.2024**
(21) Application number: 22207293.6
(22) Date of filing: 14.11.2022
(51) Int. Cl.: H01M 8/00, H01M 8/0206, H01M 8/023, H01M 8/0247, H01M 8/028, C25B 1/04, C25B 9/19, C25B 9/65, H01M 8/12

(54) **SOLID ELECTROCHEMICAL CELL STACK**

(71) Applicant: Nederlandse Organisatie voor toegepast-natuurwetenschappelijk Onderzoek TNO, 2595 DA 's-Gravenhage (NL)
(72) Inventor: Van Berkel, Franciscus, Petrus, Felix, 2595 DA 's-Gravenhage (NL); De Jong, Gerard, 2595 DA 's-Gravenhage (NL); Ferchaud, Claire, Julie, 2595 DA 's-Gravenhage (NL); Van Wees, Johannes, Franciscus, 2595 DA 's-Gravenhage (NL)
(74) Representative: V.O.

(57) **Abstract**

The preset disclosure relates to an electrochemical cell stack, comprising a solid electrochemical cell (20), an electrically conductive separator plate (30); and a seal element (40). The separator plate comprises: a central portion (31) with a comparatively recessed bottom face (32) supporting the solid oxide cell, and an outward face (34), opposite the recessed bottom face, contacting an adjacent solid electrochemical cell; and a border portion (36) providing a compactivity raised top (37) and an upstanding sidewall (38). The seal element (40) extends between the raised top face of the border portion and an opposing bottom face (39) of adjacent separator plate. A separation distance between the recessed bottom face and the outward face of an adjacent separator plate as defined by a combined height of the seal element and the upstanding sidewall matches a thickness of the solid electrochemical cell.

## Description

### TECHNICAL FIELD AND BACKGROUND

The present disclosure relates to an electrochemical stack and an electrochemical device comprising solid electrochemical cells, a kit of parts for assembly with a solid electrochemical cell to form the electrochemical stack, a method of manufacturing parts, and to uses of the electrochemical stack.

A solid oxide cell (SOC) is an electrochemical conversion device that, as a solid oxide fuel cell (SOFC), can directly produce electricity from oxidizing a fuel; or, as a solid oxide electrolyzer cell (SOEC), can produce fuel such as hydrogen (H₂), carbon-monoxide (CO), and/or syngas (mixture of H₂ and CO) from water (H₂O) and carbon-dioxide (CO₂), e.g. using electricity and/or heat. SOCs can be characterized by their ceramic-based electrolyte material able to operate at high temperature, e.g. between 500 and 850 °C. A single SOC may comprise a fuel electrode layer formed in porous ceramic to allow the fuel to flow towards the electrolyte; an air electrode, formed as a thin porous layer where oxygen reduction takes place; an electrolyte, which is a dense layer of ceramic that conducts oxygen ions positioned in between the fuel and air electrodes. A current collecting layer may be positioned adjacent to the fuel electrode. A SOC stack may consist of multiple (typically hundreds) of cells, where different SOCs can be connected to each other in a stack configuration. The repeating unit of the stack configuration in conventional configurations can comprise two separator plates; a SOC cell positioned between the separator plates; a gas manifold for fuel and gas to enter/exit the cell; and a combination of multiple seals and a manifolding frame for sealing the SOC cell and separator plates together. Unfortunately, the multiple components constituting a SOC stack, can make assembly complex and/or cost-inefficient. Furthermore, operation of SOC stacks under pressure is difficult, e.g. requiring the use of a pressure vessel.

WO2022043087A1 describes of a stack of so-called metal-supported cells. The metal supported cells form part of a manifold in combination with an external skirt.

EP3846265A1 describes a fuel cell interconnect assembly. The stack configuration as disclosed comprises an interconnect plate that is connected through joints with both a cathode and anode interface, and requires on each side a seal.

However, there remains a need for SOC stacks with reduced complexity, reduced number of parts per repeat unit, and/or with improved flexibility in terms of operation under pressure conditions.

### SUMMARY

The present invention aims to eliminate or at least mitigate the limitations associated to known stack assemblies. Alternatively, or in addition, the present invention aims to provide an assembly having a reduced number of parts per repeat unit and/or having an internal manifolding and/or an assembly being operable without a need for an external pressure vessel.

Aspects of the present disclosure relate to an electrochemical stack. The stack is comprised of a cell unit that is disposed between first and second adjacent cell units. The stack can be used to particular advantage in an electrochemical device. During use the stacked units are generally held in compression, e.g. by applying opposing forces onto terminal end plates of the stack.

Each cell unit comprises at least at least one solid electrochemical cell, an electrically conductive separator plate, and an electrically insulating seal element. As used herein the solid electrochemical cell can be an electrochemical cell having a solid electrolyte layered between opposing solid or semi-solid (e.g. gel) electrode layers. The solid electrochemical cell can be an electrochemical cell having a solid electrolyte layered between opposing porous solid electrolyte layers. As will become clear from the specification hereinbelow each cell unit typically comprises only single ones of the separator plate and the seal. This greatly simplifies manufacturing and assembly, while realizing adequate sealing both in terms of electrical insulation and confinement of process gasses.

The solid electrochemical cell can be a solid oxide cell. The solid electrochemical cell is provided as layer stack, preferably a self-supporting layer stack, including a first electrode layer and a second counter electrode layer, that are separated by a solid electrolyte layer. The solid electrochemical cell, e.g. solid oxide cell, can be understood as an electrochemical conversion device. The device can be used, in so-called fuel-cell-mode, to produce electrical power or in an electrochemical conversion of feedstock to product, in so-called electrolyzer-mode. The first electrode layer, also referred to as fuel electrode, is typically comprised in a porous ceramic and allows the fuel (reagents) to flow towards the electrolyte. The second electrode, the counter electrode, also referred to as an air electrode or oxygen electrode is generally deposed as a porous layer where oxygen reduction takes place. The electrolyte, positioned in between the fuel and air electrode layer, is generally comprised of a dense layer of ceramic that conducts oxygen ions. Advantageously the solid electrochemical cell (e.g. the solid oxide cell) can be a free standing, a self-supporting cell element. Alternatively, or in addition, the layer stack can be provided on a porous carrier, preferably a conductive porous substrate, e.g. a current collector such as a metal or otherwise electrically conductive mesh.

The electrically conductive separator plate extends between the solid electrochemical cell (e.g. the solid oxide cell) and a solid electrochemical cell (e.g. solid oxide cell) of the first adjacent cell unit. The separator plate comprises a central portion and a border portion that extends around the central portion. The central portion includes i) a comparatively recessed bottom face and ii) an outward face, opposite the recessed bottom face. The recessed bottom face defines a contact face that supports the solid electrochemical cell (e.g. solid oxide cell). The outward face contacts the solid electrochemical cell (solid oxide cell) of the first adjacent cell unit. The border portion provides an upstanding sidewall extending circumferentially from the recessed bottom face and that ends at a comparatively raised top face.

The seal element extends between the electrically conductive separator plate and the electrically conductive separator plate of the second adjacent cell unit. In particular, the seal is dimensioned to extend between the raised top face of the border portion and an opposing bottom face of the border portion of a separator plate of the second adjacent cell unit.

A separation distance between the recessed bottom face of the separator plate and the outward face of the second adjacent separator plate as defined by a combined height of the seal element and the upstanding sidewall matches a thickness of the solid electrochemical cell (solid oxide cell).

The disclosure thus provides a stack and corresponding device wherein each cell is confined by a cavity that is that is bound longitudinally by contact faces of adjacent separator plates and laterally by the upstanding sidewall of the comparatively raised border in combination with the seal element. By matching the dimension of the stack and the size of the cell the adequate sealing can be realized both in terms of electrical insulation between adjacent separators while providing adequate confinement of process gasses within the stack, enabling operating of electrochemical device without a need for positioning the cells/stack in external pressure vessel.

In a preferred embodiment, the seal element extends inwardly from the raised top face of the border portion, past the upstanding sidewall to form an overlap with a free top face of the solid electrolyte layer. Overlapping the seal with the solid electrolyte layer advantageously mitigates leakage of feedstock (e.g. fuel of air) via a gap between the sidewall and the solid oxide cell, i.e. from a "fuel: side or compartment to an "air" side or compartment or vice versa. This improves overall efficiency and/or safety during use. The seal preferably forms a circumferential overlap with the electro solid electrolyte layer. The overlap advantageously reduces a manufacturing accuracy of matching the shapes of the recess and cell and/or the need for a supplemental lateral seal between sidewall and cell. It will be understood that at least one of the fuel and air electrode layers is configured to leave a circumferential edge portion of the electrolyte layer uncovered for direct contact with the seal. The overlap with a free top face of the solid electrolyte can be realized in a number of ways. For example, by providing the seal element with a correspondingly dimensioned protruding or recessed portion. In a preferred embodiment, the overlay is realized by aligning the free top face of the solid electrolyte layer with the top face of the border portion. The thickness of the seal element can cover the remaining distance to the adjacent separator plate. Matching the height of the upstanding sidewall (the depth of the recess) to a thickness of the cell up to and including the solid electrolyte layer simplifies manufacturing of the parts.

In a strongly preferred embodiment the central portion and the border portion of each separator plate are parts of a monolithic metal plate. Preferably, each cell unit comprises no more than single ones of the separator plate and the seal element. Forming the plated from a single monolithic object and/or using only a single seal element further mitigates potential leakage of process feeds by limiting the number of contact interfaces between parts and simplifies assembly of the stack.

In another or further preferred embodiment, the electrochemical stack further comprises means to provide fluid (e.g. gas) access to the fuel, respectively opposing sides of the solid oxide electrochemical cell. For example, the electrochemical stack can comprise a first channel structure and a second channel structure, additional the first. The first channel structure is configured to provide fluid access (e.g. fuel feedstock) to the electrode or the counter electrode layer of the solid electrochemical cell (e.g. solid oxide cell). The second channel structure is configured to provide fluid access (e.g. air feed) to the other of the electrode and the counter electrode layer. The channels structures can be provided by any method known in the field such as bores or conduits extending though the sidewall and opening at positions in the cavity that correspond to the position of the respective porous anode or cathode layers. Accordingly, in one embodiment the second channel structure provides fluid access (e.g. fuel) between the separator plate and the electrode layer of the solid oxide cell, whereas the first channel structure provides fluid access (e.g. air) between the counter electrode layer of the solid oxide cell and an adjacent separator plate, or vice versa (e.g. in case the solid oxide cell is oriented in the other way around).

Preferably, the first channel structure and the second channel structure extends between a first pair respective a second pair of apertures, provided in the border portion. The extend across a thickness of the border portion. Advantageously, the apertures line up with apertures of adjacent plates forming internal inlet/outlet headers that extend longitudinally along the stack and provide fluid (oxidant fuel) access to/from the respective anode/cathode sides of the solid oxide cells.

In another or further preferred embodiment, the first channel structure and the second channel structure respectively comprise: a first structure of grooves formed in the recessed bottom face and that extend between the first pair of apertures; and a second structure of grooves formed in the outward face that extends between the second pair of apertures. The groove structures form a plurality of open channels between ridges, whereby the tops face of the ridges form a contact face for supporting the solid oxide cell and whereby the open channels allow fluid transport to/from the cell. The open channels on opposing faces of each plate can be oriented as known in the field. In a preferred embodiment, the channels are oriented largely parallel. Parallel channels allow operating the device with fuel and oxidant flows in counter-current or co-current operation. When the channels are aligned it can be preferred that the ridges on opposing faces of each plate are staggered with respect to each other. Alternatively, or in addition, the channels may be configured in cross flow (e.g. perpendicular). A staggered or cross-configuration may advantageously mitigate formation of stress fields/lines within the cell.

In some preferred embodiments, the electrochemical stack, further comprises an inlay plate provided at a target position covering the groove structure along a portion of its trajectory between the aperture and the area supporting the cell, the inlay preferably having a thickness so as to match a height level of the raised top face within ± 5%, preferably within ±1%. Providing the inlay advantageously reduces a gap between the plate and the seal, mitigating forming of areas with increased stress upon applying a compressive force onto the stack.

As will be explained in more detail herein both the recess, the edge portion, the apertures, as well as the groove structure, can be formed by machining a single plate, including but not limited to drilling and milling, cutting a metal plate. The inlay, if provided, can e.g. be machined to level with the plate when positioned at the target position.

In some embodiments, at least part of the tops of the ridges at the contact with the solid oxide cell are rounded-off. Rounding off the tops of the ridges increased a gas transfer rate to/from the cell.

The seal element is preferably provided as a compressive seal, preferably a ceramic compressive seal able to withstand operating temperatures in a range of at least 500-700°C, preferably up to 850°C or 900°C. The compressive seal providing the thickness under working compression so seal of the space between adjacent plates and a larger transient thickness. Materials suitable for a compressive seal are generally known in the art. In a preferred embodiment, the seal is a ceramic compression seal, preferably vermiculite-based seal. Preferably, the seal is embodied as a multilayer seal having a rigid core, preferably a metal core, sandwiched between electrically insulating compressive seal layers. The metal core advantageously provides the sealing element with increased rigidity/structural rigidity, e.g. during its manufacturing, storage, and/or during assembly of the stack.

In some embodiments, the electrochemical stack further comprising a porous current collector layer disposed along an outer face of one or more of the electrode layer and the counter electrode layer. The current collector, e.g. a metal mesh, can improve current transfer between the plate and the electrode. The porous current collector layer can even be the carrier substrate for the stack of functional layers of the cell. When provided at a fuel side the porous current collector layer can be a metal grid/mesh structure, e.g. Ni-based, or otherwise electrically conductive material (e.g. Carbon-based). When provided at an oxidant side (e.g. air) side the structure is preferably formed of a composition resistant/inert to oxidation by oxygen at process conditions (e.g. Au, Pt or a protective layer coated structure, e.g. a coated ferritic steel mesh).

The present disclosure further relates to an electrochemical device. The device comprising: the stack according to any of the preceding claims, and an endplate disposed along opposing terminal ends of the stack. During use a compressing force can be applied to the endplates. As mentioned, a pressure vessel surrounding the stack is not required but can be provided. Feedstock can be provided directly to the internal gas headers comprised of aligned apertures, e.g. from respective connectors provided at the endplates.

In a preferred embodiment one or more, preferably all of the cell units comprises at least two of the solid oxide cells, e.g. 2, 3, 4 or more. The cells can be arranged in an array (e.g. a 2 × 2 array). It will be appreciated that the separator plate will be adjusted accordingly. For example, to include a corresponding plurality of the recessed areas to accommodate the cells. The plurality, e.g. the array, can advantageously covers a larger surface area than a single cell. Use of a plurality of cells as opposed to a single larger cell with the same area offers relaxed manufacturing of the cell. The use of a plurality of cells can further limit a total height of a stack assembly for a given application (at the expense of a comparatively limited increase in lateral dimensions). The use of a plurality of cells can further improve a conversion (of fuel and/or oxidant) within the layer of the stack.

The present disclosure further relates a method of manufacturing the electrochemical stack as disclosed herein. The method comprising
providing: a) a solid oxide cell comprising an electrode layer and a counter electrode layer that are separated by a solid electrolyte layer; b) an electrically conductive separator plate as disclosed herein for extending between the solid oxide cell and a solid oxide cell of a first adjacent cell unit, the separator plate comprising: a central portion providing i) a comparatively recessed bottom face for contacting the solid oxide cell and ii) an outward face, opposite the inward face, for contacting the solid oxide cell of the first adjacent cell unit; and a border portion providing a compactivity raised top face and an upstanding sidewall circumferentially extending from the recessed bottom face; and c) a seal element as disclosed herein configured for extending between the top face of the border portion and a bottom face of the border portion of the electrically conductive separator plate of the second adjacent cell unit, wherein a combined height of the seal element and the sidewall matches a thickness of the solid oxide cell,
placing the solid oxide cell onto the recessed bottom face of the separator plate, and
placing the seal element onto the raised top face of the border portion.

It will be appreciated that the method conveniently employs comparatively simple pick and place steps to assemble the stack from pre-made parts. To facilitate alignment, the respective parts may be provided with alignment means, e.g. holed, pins, and the like. Because the parts are held in compression no separate welding or gluing steps are required. Accordingly, the stack can be disassembled with comparative ease, e.g. for maintenance purposed.

The present disclosure further relates to parts for assembly of the stack/device comprising the stack. In one embodiment, there is provided a kit of parts for assembly of the electrochemical stack as disclosed herein. The kit comprises: the electrically conductive separator plate and the seal element as disclosed herein.

The separator plate comprises at least a central portion providing: i) a comparatively recessed bottom face comprising a first cell support area configured for receiving the solid oxide cell, and ii) an outward face, opposite the recessed bottom face, comprising a second cell support area configured for contacting the solid oxide cell of the first adjacent cell unit, and a border central portion providing a comparatively raised top face and an upstanding sidewall circumferentially extending from the recessed bottom face. The seal element correspondingly configured for at least extending between the raised top face of the border portion and a recessed bottom face of the border portion of the electrically conductive separator plate of the second adjacent cell unit, and whereby the seal element and the upstanding sidewall are configured provide a separation distance between the first cell support area of the separator plate and the second cell support of the second adjacent separator plate that matches a thickness of the solid oxide cell. In a preferred embodiment, the kit further comprises an inlay plate as disclosed herein. The seal element may be the multilayer seal as disclosed herein.

It will be understood that the kit can comprise a plurality of these parts, e.g. 10, 100, or more. Likewise, it will be understood that kit can further comprise one or more of the half endplates as disclosed herein and/or a manual with instructions as to the assembly/disassembly of the stack. The kit may further include a corresponding number of solid electrochemical cells, e.g. solid oxides cells as disclosed herein.

The present disclosure further relates to a method of manufacturing the separator plate as defined herein. The method comprises machining, e.g. milling, a central portion of an essentially planar metal base plate to form the recessed bottom face configured to receive a solid oxide cell, and leaving a comparatively raised border portion (36) around the central portion. It will be understood that the method can further comprises machining, preferably with the same tool, a first structure of grooves in the recessed bottom face forming a first channel structure extending between a first pair of apertures provided in the border portion, and providing (e.g. engraving otherwise machining) a second structure of grooves formed in an outward face of the separator plate, opposite the recessed bottom face, forming a second channel structure extending between a second pair of apertures provided in the border portion. Likewise it will be understood that the method may comprised a step providing the inlay plate as disclosed herein.

The present disclosure further relates to a use of the electrochemical stack according or device as disclosed herein for the generation electrical power or for the manufacture of hydrogen and/or syngas and carbon monoxide.

### BRIEF DESCRIPTION OF DRAWINGS

These and other features, aspects, and advantages of the apparatus, systems and methods of the present disclosure will become better understood from the following description, appended claims, and accompanying drawing wherein:
FIG 1A and 1B provide schematic overviews of operating a solid oxide cell;
FIG 2 provides a cross-section side view of a stack repeating unit, comprising a solid oxide cell, separator plate and seal;
FIG 3 illustrates aspects of a solid oxide cell
FIG 4A provides an exploded perspective top-view of an electrochemical stack;
FIG 4B provides an exploded perspective bottom-view of an electrochemical stack;
FIG 5A provides a perspective view of an electrochemical stack;
FIG 5B provides a top down view of an electrochemical stack;
FIGs 6A, 6B, and 6C provide cross-section side detail views of an electrochemical stack at a header area;
FIGs 7A, and 7B provide cross-section side views of an electrochemical stack at an active area;
FIG 8A illustrates aspects of a seal element;
FIG 8B illustrates aspects of an electrochemical device;
FIG 8C provides a top view an electrochemical device;
FIGs 9A and 9B provide photographs of parts of the electrochemical device;
FIG 9C provide photographs of an assembled electrochemical device during use;
FIGs 10 and 11 illustrate aspects of the assembly of an electrochemical device; and
FIGs 12A and 12B provide perspective views of a plate configured to receive a plurality of solid oxide cells and of that plate partially provided with corresponding cells.

### DESCRIPTION OF EMBODIMENTS

Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise. Likewise it will be understood that when a connection between structures or components is described, this connection may be established directly or through intermediate structures or components unless specified otherwise.

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

A SOC operating in fuel cell mode is also referred to as solid oxide fuel cell (SOFC). A SOC operating in electrolyzer mode is also referred to as a solid oxide electrolyzer cell (SOEC). The cathode is the electrode of an electrochemical cell at which reduction occurs. The cathode can be negative like when the cell is electrolytic (where electrical energy provided to the cell is being used for decomposing chemical compounds); or positive as when the cell is galvanic (where chemical reactions are used for generating electrical energy).

A solid oxide cell (or SOC) is an electrochemical conversion device that either produces in fuel cell mode electricity directly from oxidizing a fuel or produces in electrolyzer mode hydrogen, syngas, CO from resp. H2O and CO2. Solid oxide cells are characterized by their ceramic-based electrolyte material able to operate at high temperature (600-850°C).

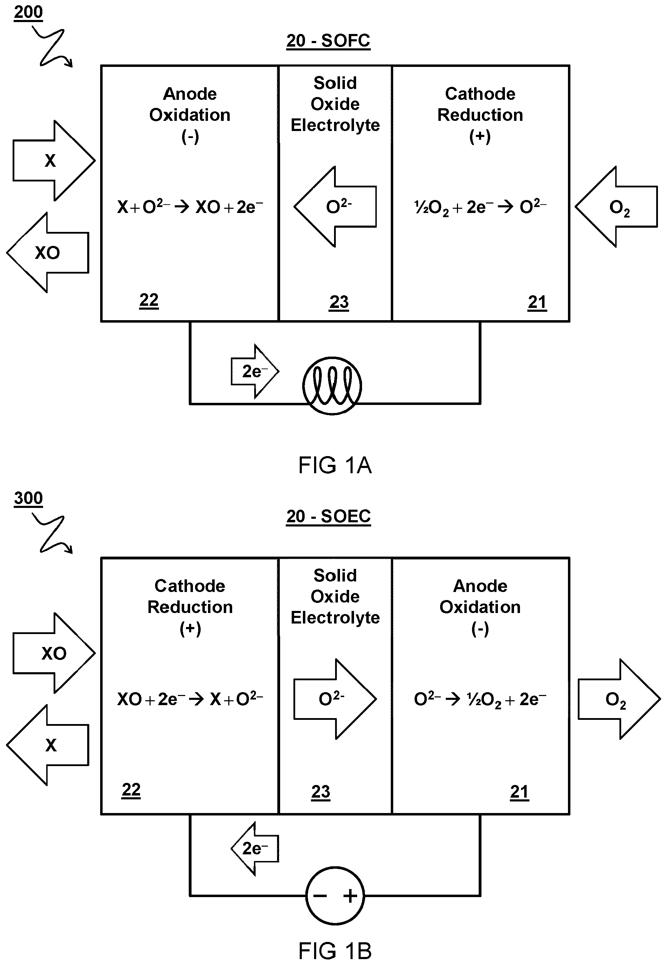

Fig 1 schematically illustrates a SOC 20 during an exemplary operation, whereby FIG 1A illustrates use 200 in fuel cell mode and Fig 1B illustrates use 300 in electrolyzer mode. The solid oxide cell 20 comprises an air electrode 21 (positive in SOFC, negative in SOEC) and a fuel electrode 22 (negative in SOFC, positive in SOEC) that are separated by a solid electrolyte layer 23. The electrolyte layer is conductive for oxide ions (O²⁻) but impermeable for fuel and oxidant flows. The remaining parts are not drawn for clarity. For example, typical oxygen ion conducting electrolytes include Yttrium-, Scandium-, Cerium- doped Zirconia e.g. ZrO₂ having a fluorite structure, or a mixture of two or more of these.

It will be appreciated that the invention as disclosed herein can be equally applied to solid electrochemical cells having a solid electrolyte layered between opposing solid or semi-solid (e.g. gel) electrode layer. For example, cells comprising a proton conductive solid electrolyte sandwiched between corresponding electrode layers. Typical proton-conducting electrolytes include, for example, oxides with the perovskite structure ABO₃, with a composition BaZr₁-xYxO₃, BaCe₁-xYxO₃ or mixtures of two or more these compositions.

Returning to Fig 1, an oxidant flow (O2) is supplied to an air side of the cell. A reagent flow is provided to the fuel side of the cell. In SOFC mode oxygen ions are formed at the air electrode are transported across the electrolyte to react with fuel. In SOEC mode a reagent is reduced at the fuel electrode. Formed oxide ions are transported to the air electrode to be released as oxygen. In fuel mode the fuel X can be hydrogen (H2) or carbon monoxide (CO), which are respectively oxidized (XO) to water (H2O(g)), carbon dioxide (CO2), etc. In electrolyzed mode Oxidized fuel (XO) is supplied such as steam, carbon dioxide, which are reduced to hydrogen, CO, etc. The process is typically performed at high temperatures (500-900°C). The pressure can be atmospheric or above.

In particular the device as disclosed herein can advantageously be operated at an overpressure. For example, an overpressure of mbars, e.g. up to 500 mbar overpressure or even 1 bar over pressure, or more without the use of an external pressure vessel.

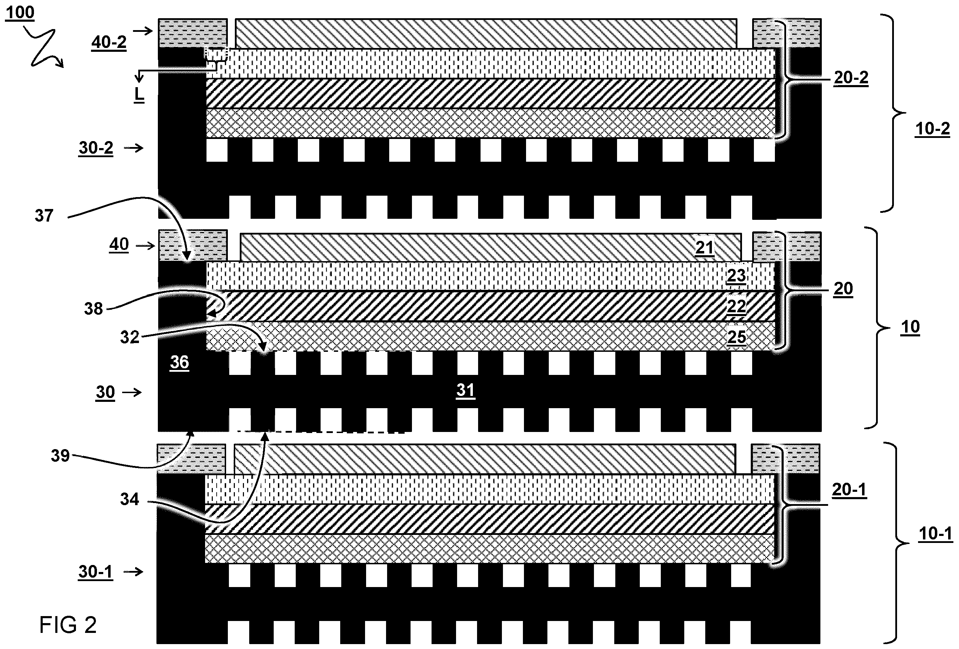

Fig 2 provides a cross-section side view of an electrochemical stack 100 comprising a cell unit 10, a first adjacent cell unit 10-1, and a second adjacent cell unit 10-2. Note that during use the cell unit 10 is in direct contact with, sandwiched between, the adjacent cell units.

Each cell unit comprises a solid oxide cell 20,20-1,20-2, a separator plate 30,30-1,30-2 and a seal 40,40-1,40-2. The solid oxide cell 20 is held in a cavity. Each cell comprises at least an electrode layer 21, a counter electrode layer 22, and a solid electrolyte layer 23. In some embodiments, e.g. as shown, a porous current collector layer 25, e.g. a Nimesh, is provided which extends along an anode side or cathode side of the cell. Typically, the cathode side in SOEC-mode and the anode side in SOFC-mode.

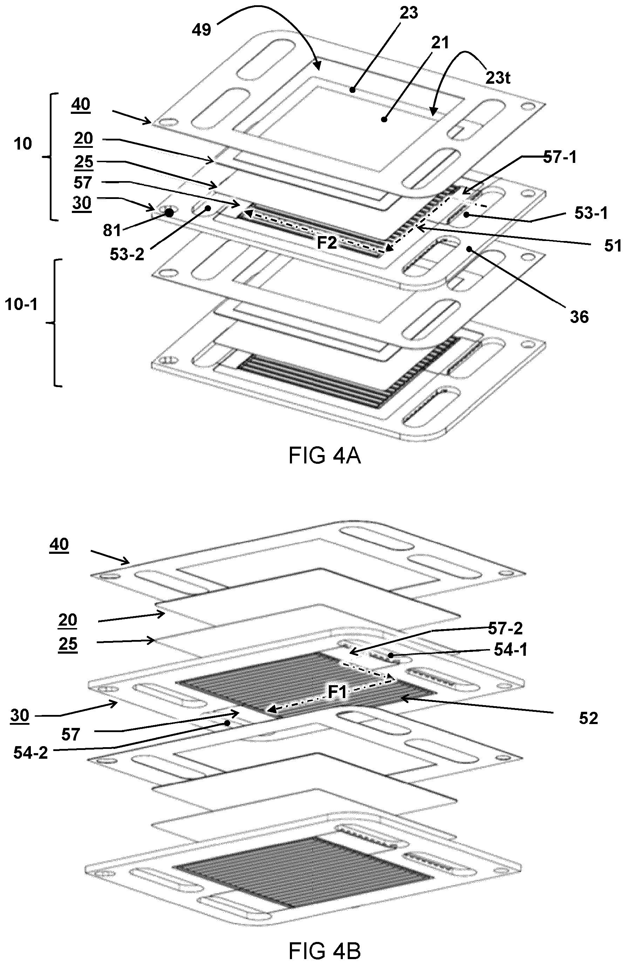

The cavity is defined by a recessed bottom face 32 provided in a central portion 31 of the plate. The plate is electrically conductive, e.g. metallic, preferably a ferritic stainless steel, e.g. CROFER^{®} 22H and/or CROFER^{®} APU. Surrounding the recess is a border portion 36 with upstanding sidewall 38 that extend upward in a direction along the stack. The seal element 40 comprises an aperture 49 (best seen in FIG 4A) at a location of the electrode layer 21 and extends between the raised top face 37 of the border portion 36 of the seal element 40 and a bottom face 39 of an adjacent separator plate 30-2.

As shown a separation distance between the recessed bottom face 32 and an opposing outward face 34 as defined by the combined height of the seal and the sidewall matches a thickness of the solid oxide cell 20.

In a preferred embodiment, the SOC stack configuration is embodied as a so-called supported cell, where one of the electrodes provides the mechanical integrity on top of which a thin (e.g. < 10 micron) electrolyte layer is positioned.

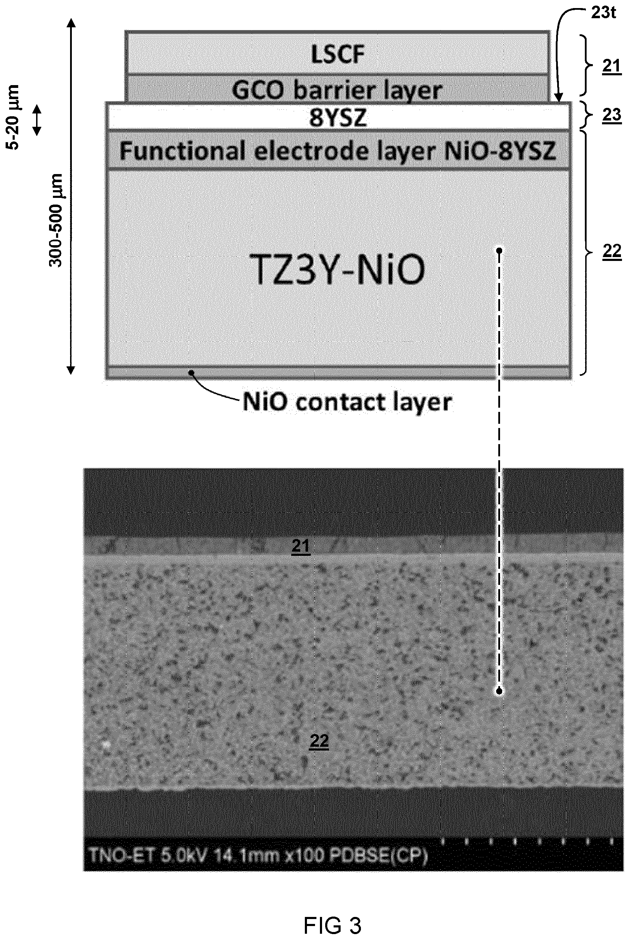

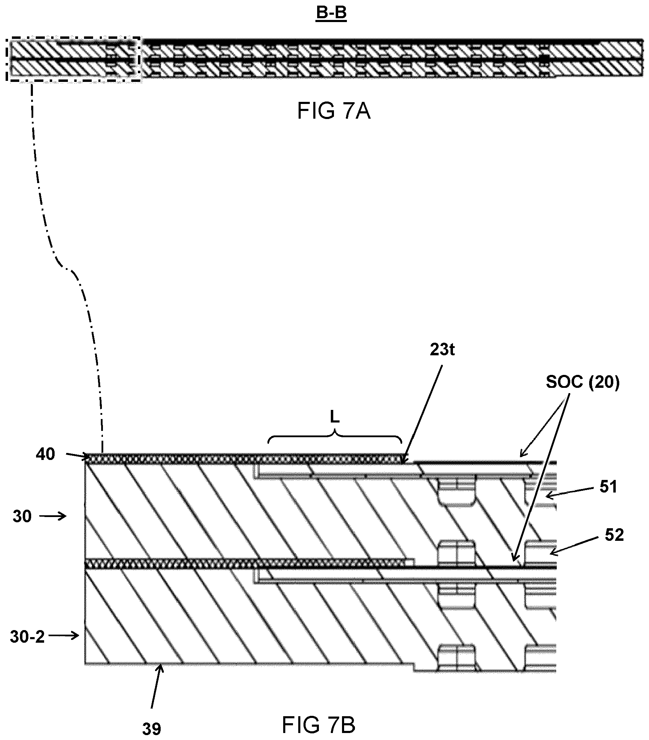

FIG 3 provides a cross-section side view of a solid oxide cell 20 as used in FIG 2. The cell generally includes a porous electrode layer 21 comprising an active oxide electrode layer and a barrier layer in a preferred embodiment, e.g. as shown the oxide electrode layer is embodied as an LSCF layer, and the barrier layer is embodied as GCO layer. The LSCF layer can have an overall composition of La0.6Sr0.4Fe0.8Co0.2O3 and allows conversion between oxygen and oxygen ions (depending on operation mode). The barrier layer prevents reaction of active layer constituents with the electrolyte layer but allows passage of oxygen ions and electrons. In the embodiment as shown the barrier has an overall composition Ce0.8Gd0.2O2. The cell further comprises an electrolyte layer. The electrolyte layer permits passage of oxygen ions but not electrons. It is typically embodied as a dense ceramic layer. In the embodiment as shown the solid electrolyte layer 23 is an Yttria-stabilized zirconia layer (e.g. 8YSZ). The cell further comprises an electrolyte layer a counter electrode layer 22, also referred to a functional fuel electrode layer. In a preferred embodiment, e.g. as shown, the fuel electrode layer is embodied as NiO-8YSZ layer (8 mol% Y2O3 fully stabilized ZrO2). A support layer, shown as TZ3Y-NiO layer, supports the electrolyte and functional electrode layers. A contact layer can be provided to improve current collection. In the embodiment as shown the contact layer is a NiO-based layer. The TEM image in an illustration of the porosity of the stack. Note that the electrode layer 21 does not extend over the full area of the solid electrolyte layer 23, a boundary portion of the solid electrolyte layer 23 is left free. In some embodiment this free top surface 23t is in direct contact with the seal element 40 (see e.g. Figs 2 and 7B).

Note that the cell shown is not drawn to scale. The thickness of the solid oxide cell 20 is generally in the order of hundreds of microns (e.g. 0.1-2 mm), typically in a range of 0.3-0.6 mm, e.g. about 400 or 500 microns, whereas the surface area is generally in a range of hundreds of square centimeters (e.g. 50-1000 cm²) or more. For example, in case the SOC is embodied with an overall square shape the side lengths are generally in a range of 10-40 cm, e.g. in a range or 15 ± 5cm, or more. Larger cells can be preferred but may become increasingly hard to manufacture. Of course other shapes and thicknesses are also envisioned. The cavity as provided by the seal and opposing plates is dimensioned accordingly. The separator plate can be comparatively thick, preferably ≥ 1mm, e.g. about 2-4 mm, to provide mechanical stability even when machined and acts as support for the SOC

Of course the disclosure it not to be interpreted as being limited to the can be solid oxide cell 20 as shown in Fig 2. It will be appreciated that the invention can be used to advantage with other solid oxide cell 20 as known in the art. For details and exemplary cells reference is made to "Status of Solid Oxide Cell development at TNO" by Van Berkel et al in EFCF 2022: 15th European SOFC & SOE Forum, 8 July 2022, Lucerne Switzerland, A1206 p1-10, to G. Tao et al. "II.A.2 A Reversible Planar Solid Oxide Fuel-Assisted Electrolysis Cell and Solid Oxide Fuel Cell for Hydrogen and Electricity Production Operating on Natural Gas/Biogas" in DOE Hydrogen Program, FY 2006 Annual Progress Report, page 24-28. and to "Review of Progress in High Temperature Solid Oxide Fuel Cells". Journal of the Australian Ceramics Society. 50 (1), which are all herewith incorporated in full by reference.

In some preferred embodiments, e.g. as shown in Figs 2, 4A, 4B, 7B the seal overlaps (L) with a free top face of the solid electrolyte layer 23. By overlapping with the solid electrolyte layer 23 fluid transfer (e.g. air or fuel) between opposing sides of the cells is avoided. The overlap length L along the free top surface 23t of the electrolyte layer is typically ≥ 1 mm, preferably more e.g. 0.5-1 cm or even up to 2 cm. In practice the seal extends across the vertical wall by a distance of up to 1-2 cm. This range was found to offer relaxed manufacturing conditions as a tolerance of small gap between the sidewalls of the recess and the SOC, with a comparatively minimal loss of active electrode area.

Figs 4A and 4B provides exploded perspective views illustrating the build-up of an electrochemical stack. FIG 4A provides a top view perspective view of a cell unit 10 covered by an adjacent unit 10-1. FIG 4B provides a bottom perspective view of a cell unit 10 covering by an adjacent unit. The units comprise the elements described in relation to FIG 2. As shown in the top view the electrode layer 21 of solid oxide cell 20 leaves a top face 23t of the solid electrolyte layer 23 free. According to a preferred embodiment each of the separator plates 30,30-1 are formed from a single monolithic metal plate into which a recessed central portion is provided leaving a comparatively raised border portion 36 (see also Fig 2). The border portion is provided with pairs of apertures 53-1,53-2,54-1,54-2. The recessed bottom face comprises a support area for supporting the SOC and is provided with a first channel structure 51. The first channel structure 51 extends between a first pair of the apertures. Along an outward face of the plate, opposite the recessed face, a second channel structure 52 is provided. The second channel structure running along a second support is for supporting an adjacent SOC. The second channel structure 52 extends between a second pair of apertures 54-1,54-2. The seal element 40 is dimensioned to extend along between the raised top face 37 of the plate and an adjacent plate. The seal is provided with an aperture providing access the solid oxide cell 20, whereby the seal is dimension to extends inwardly along the free top surface 23t of the solid electrolyte layer 23. The seal is also provided with apertures at positions corresponding the apertures in the border portion of the plate. Together with adjacent units these aperture form heads providing fluid access to/from each unit. As illustrated in Fig 4B, during use, a fuel side of each SOC is exposed by a first fluid flow F1 (e.g. fuel) running from aperture 54-1 to 54-2 via second channel structure 52. The corresponding air electrode side of each SOC can, during use, be exposed by a second fluid flow F2 (e.g. air) running from aperture 53-1- to 53-2 via first channel structure 51. To facilitate alignment of the plates and seals alignment apertures 81 are provided. Inlay plates 57-1 and 57-2 are provided. Inlay plate 57-1 covers groove structure 51 along a portion of its trajectory between the apertures and the cell support area. Inlay plate 57-2 covers groove structure 52 along a portion of its trajectory between the apertures and the cell support area. Inlay plate 57-1 has a thickness so that the plate matches a height level of the raised top face 37 of the plate. Inlay plate 57-2 has a thickness so that the plate matches a height level of the bottom face 39 of the plate (see FIG 2).

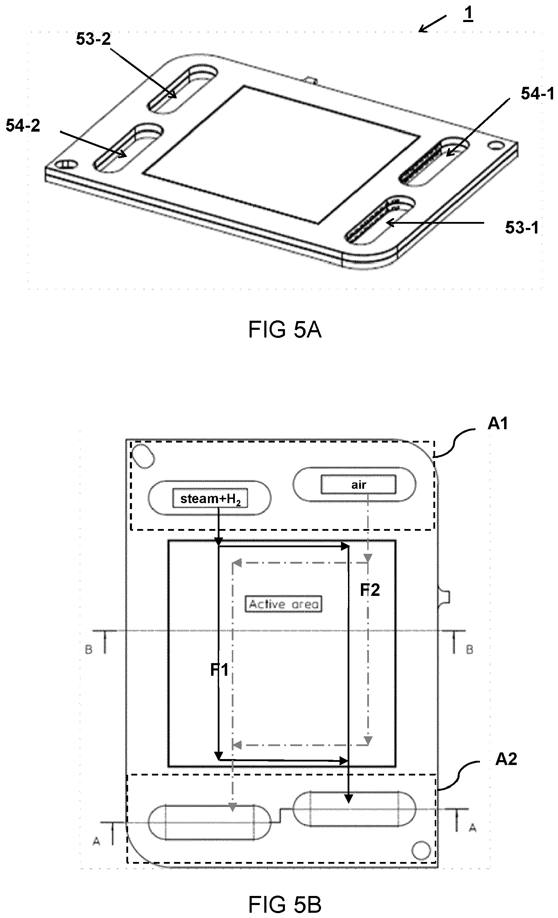

Figs 5A and 5B further illustrate aspects of the stack 1 in assembled state, whereby FIG 5A provides perspective view of an electrochemical stack and FIG 5B provides a plan view of the electrochemical stack. As shown more clearly in FIGs 5A and B the border portions with the aligned apertures can be understood as forming zones A1 and A2 with gas headers that provide fluid access to each of the cell. The groove structure distributes the respective flows F1,F2 over the active cell areas.

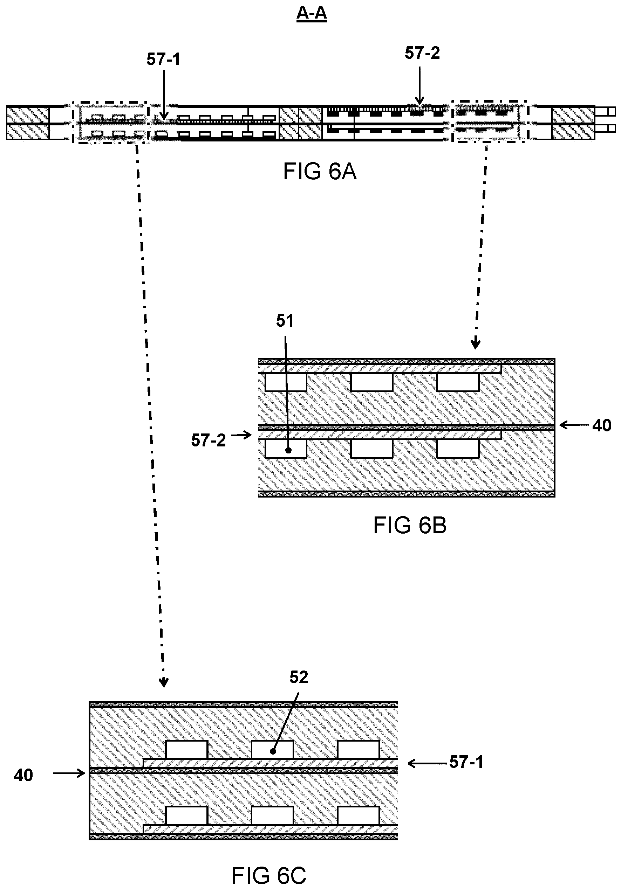

FIGs 6A, 6B, and 6C provide cross-section side detail views of an electrochemical stack at header area A2, whereby FIG 6A is a cross section side view along line A-A in Fig 5B, and FIGs 6B and 6C are detail views of portions marked in FIG 6A. As shown most clearly in FIGs 6B and 6C inlays 57-1 and 57-2 ensure that seal 40 perceives a level contact surface at a location between the corresponding apertures and the active cell areas. This spreads out contact forces and mitigates buildup of local stress between adjacent plates.

FIGs 7A, and 7B provide cross-section side views of an electrochemical stack at an active area, whereby FIG 7A is a cross section side view along line B-B in Fig 5B, and FIG 7B is a detail view of the portion marked in FIG 7A. As best seen in FIG 7B seal 40 overlaps a free top face 23t of the SOC 20 over a distance L. In some embodiments, e.g. as shown, a border portion of the bottom face 39 of the plate, opposite the recess, can be recessed. This secondary recess can to facilitate positioning of the seal.

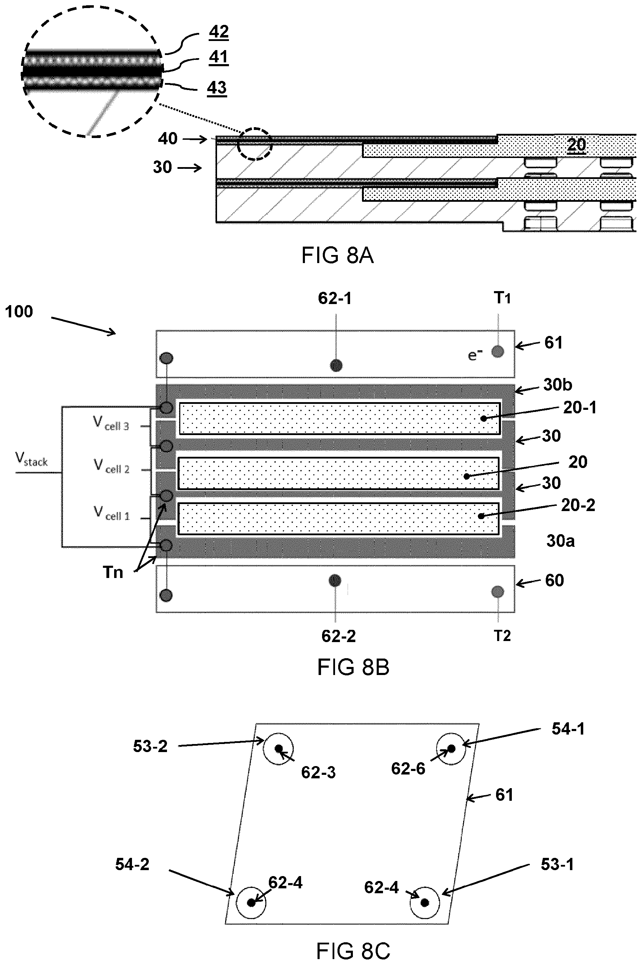

FIG 8A provides a cross-section side view of an embodiment that differs from the embodiment shown in FIG 7 in that the seal element 40 is embodied as a multilayer stack. The seal comprises three layers: two sealing layers 42, 43, preferably compression seals, most preferably vermiculite-based, with a metal foil 41 (preferably ferritic steel) in between. The seal was found to further guarantee the sealing tightness between fuel and air-compartments.

FIG 8B is a schematic side view illustrating aspects of an electrochemical device 100 comprising the stack as disclosed herein. FIG 8C provides a top view of the device. As shown the device comprises endplates 60,61 that are disposed along opposing terminal ends of the stack. During use the stacked is held in compression, e.g. by applying opposing forces onto terminal end plates of the stack. In some embodiments, the devices can be provided with one or more means to measure and preferably regulate one or more of: a temperature one or more of the plates and the endplates; a temperature of the flows; and/or a pressure applied between the opposing ends of the stack. In addition the device is preferably configured to measure/regulate an electrical potential V or an electrical current I between opposing terminal ends of the electrochemical stack 1 and/or between individual ones of the separator plates comprised in the stack. Tn the embodiment as illustrated the endplates are provided with sensors 62-1 and 62-2 form measuring the temperature of the endplate. In addition the device is configured with sensors 62-3,62-4,62-5,62-6 for measuring the temperature of possess flow in the corresponding apertures. In addition the device is provided with plurality of terminals T1,T2,Tn for measuring/applying electrical potentials and/or currents during device operation. Note that the stack can also include so-called half-plates 30a and 30b between the stack and the endplates. These half plates differ from the separator plates in that these plates are unpatterned, flat, at a side contacting the endplates.

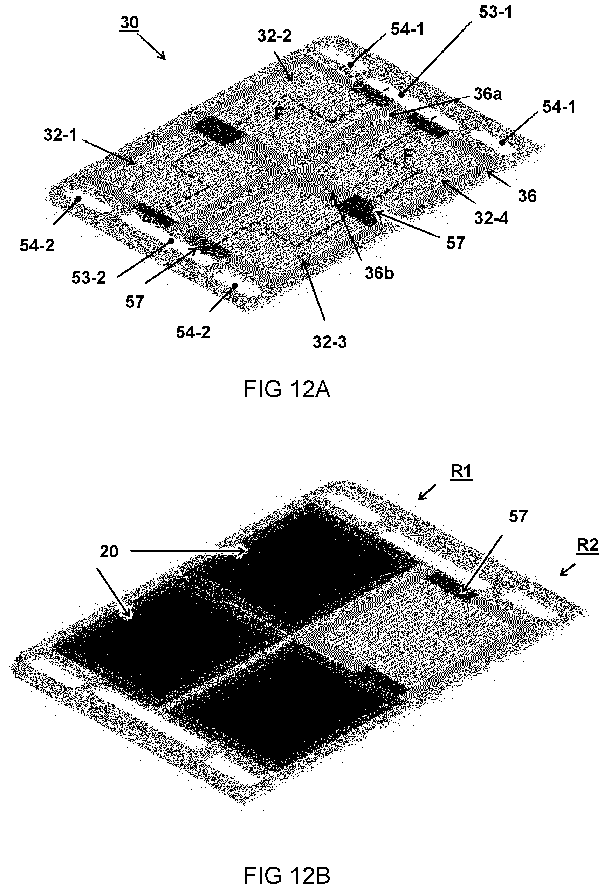

As illustrated in FIG 12 each repeating unit in the stack can comprise at least two of the solid oxide cells. FIG 12A illustrates a separator plate 30 which differs from described plates in that it is configured to receive four solid oxide electrochemical cells in a 2 × 2 array. Of course other configurations with different number of cells on or alternate relative positioning are also envisioned. In the embodiment as shown the plate comprises four comparatively recessed bottom faces 32-1,32-2,32-3,32-4. As shown the plate is configured for positioning the solid oxide electrochemical cells in two rows (R1,R2), whereby in each row adjacent cells are connected in series. Note that the raised side wall extends circumferentially around the array and the headers. Advantageously adjacent rows can share a common header. Note that the plate preferably also comprises a raised separator wall 36a between adjacent rows. The plate preferably also includes a separator wall between adjacent cells within a row. To allow passage of gas the plate preferably comprises a groove structure and the inlay plates 57 as described herein above in relation to FIGs 4-6.

FIG 12B illustrates the same plate carrying three of the four solid electrochemical cells 20. A seal element (not shown) would be provided after positioning the fourth cell. It will be understood that the seal comprises apertures that correspond to the positions of the solid electrochemical cells and the gas headers.

The disclosure further relates to a method of manufacturing the electrochemical stack. In a preferred embodiment, method comprises at least: providing a) the solid oxide cell com as disclosed herein; b) the electrically conductive separator plate as disclosed herein and a solid oxide cell of a first adjacent cell unit, and c) the seal element as disclosed herein. The method further comprises an assembly process including, placing, the solid oxide cell onto the recessed bottom face of the separator plate, and placing the seal element onto the raised top face of the border portion. The parts as provided can preferably include one or more or even all of the aspects as discussed herein above in relation for FIGs 1-8.

According to further aspects the parts may be provided as a kit of parts for assembly with a solid oxide cell to form the electrochemical stack as disclosed herein. The kit comprising at least: an electrically conductive separator plate 30 for assembly between adjacent solid oxide cells, and a seal element 40 for assembly between the adjacent electrically conductive separator plate, wherein the separator plate comprises a central portion 31 providing: i a comparatively recessed bottom face 32 comprising a first cell support area 33 configured for receiving the solid oxide cell 20, and ii) an outward face 34, opposite the recessed bottom face 32, comprising a second cell support area 35 configured for contacting the solid oxide cell of the first adjacent cell unit 10-1, and a border central portion 31 providing a comparatively raised top face 37 and an upstanding sidewall 38 circumferentially extending from the recessed bottom face 32. Of course the kit may include a solid oxide cell 20 as disclosed herein and/or one or more of the other parts as discussed herein, e.g. the inlay plates.

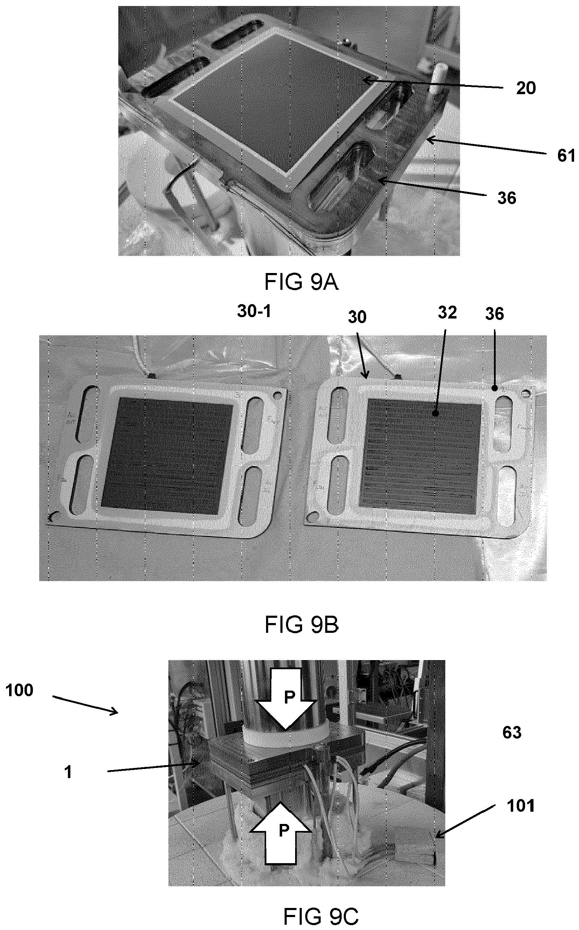

FIGs 9A and 9B provide photographs of parts of the electrochemical device during assembly. FIG 9C provides a photograph of an assembled electrochemical device 100. In particular FIG 9A depicts a partial stack as assembled on a bottom endplate 61. Visible are the border portion 36 of the top most separator plate a solid oxide cell 20. FIG 9B depicts two separator plates having a border portion 36 with apertures and recessed bottom face 32 with a patterned groove structure. The assembled electrochemical device 100 depicted in FIG 9C includes a complete stack. Also indicated are top and bottom pressure cylinders applying a contact pressure P onto the stack 1. A controller 101 measures and regulates temperature at the separator plate level.

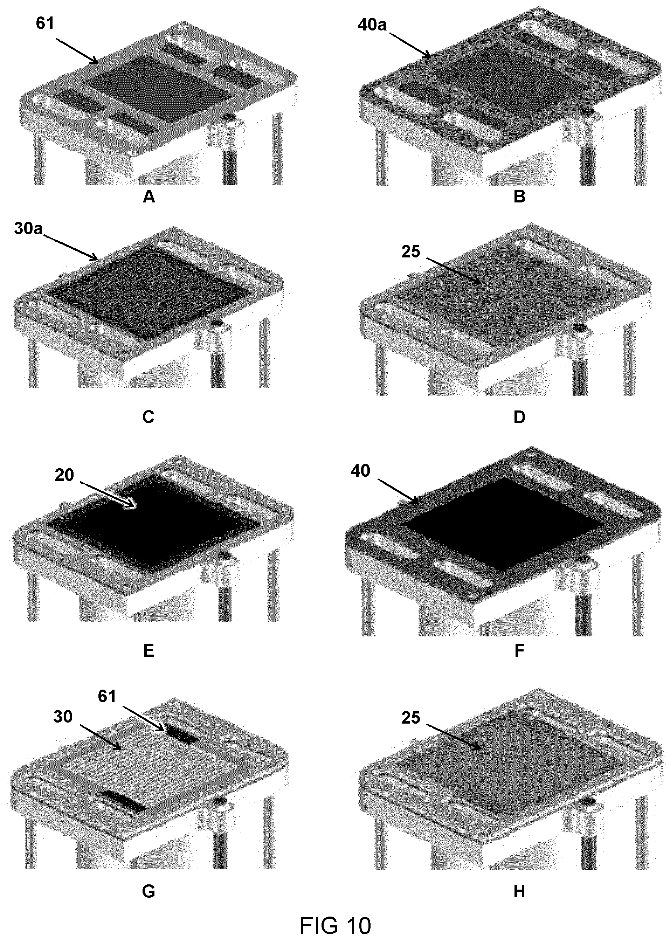

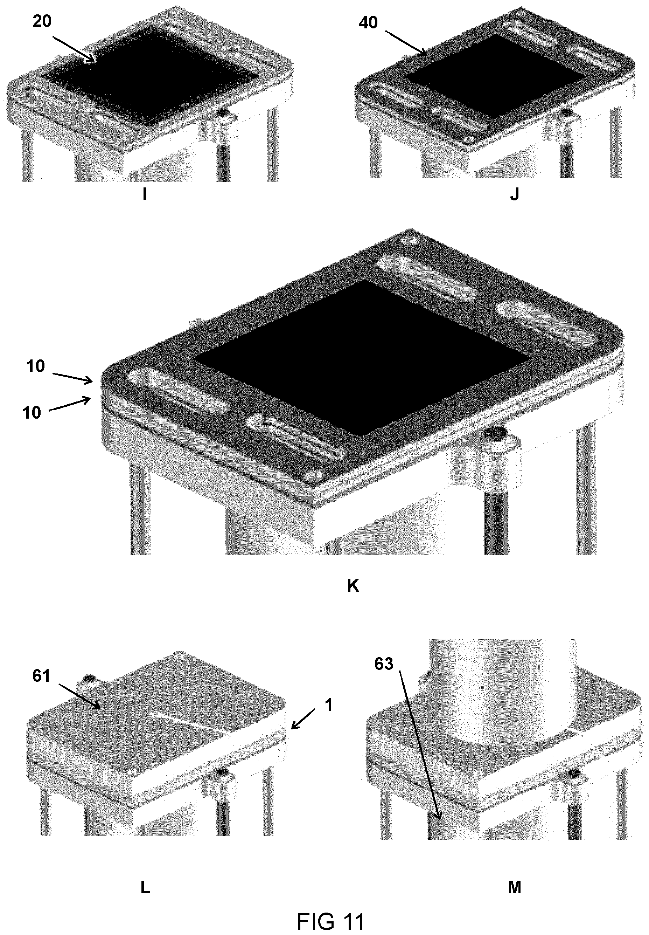

FIGs 10 and 11 illustrate aspects of the assembly of an electrochemical device. Stage A illustrates a bottom endplate 61. At stage B an end seal element 40a is provided onto the endplate 61. At C first half separator plate 30a is disposed onto end seal element 40a. The half separator plate 30a is in electrical contact with endplate 61. At D a porous Nickle mesh current collector layer 25 is disposed over the recessed bottom face of the first half separator plate 30a. At E a solid oxide cell 20 as discussed in relation to FIG 3 is placed onto the porous current collector layer 25. At F a first seal element 40 is positioned onto the border portion of the half separator plate. The seal partially overlaps a free top face of the solid electrolyte layer of the solid oxide cell 20. At G at first full separator plate 30 with inlays as disclosed herein is placed onto of the partial stack formed under F. Note only top-side inlay plates 61 are visible. At H, I, J and K further ones of the porous current collector layer 25, the solid oxide cell, the separator and the seal are provided. The process can be repeated until the stack is provided with a desired number of cell units, e.g. 100. At L a fully formed stack is illustrated. At M top and bottom pressure cylinders 63 are marked.

The disclosure further provides a method of manufacturing the separator plate. The comprising: machining (e.g. milling, drilling or otherwise removing material) a central portion of an essentially planar metal base plate forming a recessed bottom face configured to receive a solid oxide cell; and leaving a comparatively raised border portion around the central portion. In a preferred embodiment, the method further comprises providing a first structure of grooves in the recessed bottom face forming a first channel structure extending between a first pair of apertures provided in the border portion, and providing a second structure of grooves formed in an outward face 34 of the separator plate, opposite the recessed bottom face 32, forming a second channel structure 52 extending between a second pair of apertures 54-1,54-2 provided in the border portion 36. Advantageously, the groove structures and/or the apertures can be provided by the same tool as the recess.

For the purpose of clarity and a concise description, features are described herein as part of the same or separate embodiments, however, it will be appreciated that the scope of the invention may include embodiments having combinations of all or some of the features described.

In interpreting the appended claims, it should be understood that the word "comprising" does not exclude the presence of other elements or acts than those listed in a given claim; the word "a" or "an" preceding an element does not exclude the presence of a plurality of such elements; any reference signs in the claims do not limit their scope; several "means" may be represented by the same or different item(s) or implemented structure or function; any of the disclosed devices or portions thereof may be combined together or separated into further portions unless specifically stated otherwise. Where one claim refers to another claim, this may indicate synergetic advantage achieved by the combination of their respective features. But the mere fact that certain measures are recited in mutually different claims does not indicate that a combination of these measures cannot also be used to advantage. The present embodiments may thus include all working combinations of the claims wherein each claim can in principle refer to any preceding claim unless clearly excluded by context.

## Claims

1. An electrochemical stack (1) comprising a cell unit (10) disposed between first and second adjacent cell units, each unit comprising
at least one solid electrochemical cell (20)
an electrically conductive separator plate (30),
and an electrically insulating seal element (40),
wherein the separator plate comprises
a central portion (31) providing: i) a comparatively recessed bottom face (32) supporting the solid electrochemical cell, and ii) an outward face (34), opposite the recessed bottom face contacting the solid electrochemical cell of the first adjacent cell unit (10-1), and
a border portion (36) providing a compactivity raised top face (37) and an upstanding sidewall (38) circumferentially extending from the recessed bottom face,
wherein the seal element extends between the raised top face and an opposing bottom face (39) of the border portion of a separator plate of the second adjacent cell unit (10-2), and
wherein a separation distance between the recessed bottom face of the separator plate and the outward face of the second adjacent separator plate (35-2) as defined by a combined height of the seal element and the upstanding sidewall matches a thickness of the solid electrochemical cell.

2. The electrochemical stack (1) according to claim 1 wherein, the seal element (40) extends inwardly from the raised top face (37) of the border portion forming an overlap (L) with a free top face (23t) of the solid electrolyte layer (23).

3. The electrochemical stack (1) according to any of the preceding claims, wherein the central portion (31) and the border portion (36) are parts of a monolithic metal plate, and each cell unit (10) comprising no more than single ones of the separator plate and the seal element.

4. The electrochemical stack (1) according to any of the preceding claims, wherein each cell unit further comprises:
a first channel structure (51) providing fluid access between one of the electrodes and the counter electrode layer of the solid electrochemical cell, and
a second channel structure (52) channel structure providing fluid access between the other of the electrode and the counter electrode layer of the solid electrochemical cell,
the first channel structure (51) extending between a first pair of apertures (53-1,53-2) provided in the border portion (36)
the second channel structure (52) adjacent cell unit (10-2) extending between a second pair of apertures (54-1,54-2) that extend across a thickness of the border portion (36).

5. The electrochemical stack according to claim 4, wherein the first channel structure (51) and the second channel structure (52) respectively comprise
a first structure of grooves (55) formed in the recessed bottom face (32) and that extend between the first pair of apertures (53-1,53-2), and
a second structure of grooves (57) formed in the outward face (34) that extends between the second pair of apertures (54-1,54-2).

6. The electrochemical stack according to claim 5, further comprising an inlay plate (57) covering the groove structure along a portion of its trajectory between the aperture and the cell support area, the inlay having a thickness (57t) so as to match a height level of the raised top face (37).

7. The electrochemical stack according to any of the preceding claims, wherein the seal element (40) is a compressive seal, preferably a multilayer seal having a rigid core (41), preferably a metal core, sandwiched between electrically insulating compressive seal layers (42,43).

8. The electrochemical stack according to any of the preceding claims, further comprising a porous current collector layer (25) disposed along an outer face of one or more of the electrode layer (21) and the counter electrode layer (21).

9. The electrochemical stack according to any of the preceding claims wherein each unit comprises a plurality of the solid oxide electrochemical cell 20 arranged in an array, each cell supported by a corresponding one of the comparatively recessed bottom face (32).

10. An electrochemical device (100) comprising: the stack according to any of the preceding claims, and an endplate (60,61) disposed along opposing terminal ends of the stack.

11. The electrochemical device (100) according to claim 10 further comprising a controller (101) operably connected to means for or regulating one or more, preferably all, of
the temperature of the one or more of the separator plates (30) and the endplates comprised in the stack,
a pressure (P) applied between the opposing ends of the stack,
a temperature of a flow of the first fluid (F1) and/or of a flow of the second fluid (F2), and
an electrical potential (V) or an electrical current (I) between opposing terminal ends of the electrochemical stack (1) and/or between individual ones of the separator plates comprised in the stack.

12. A kit of parts for assembly with a solid electrochemical cell to form the electrochemical stack (1) of the electrochemical device according to any of claims 1-11, the kit comprising
an electrically conductive separator plate (30) for assembly between adjacent solid electrochemical cells, and
and a seal element (40),
wherein the separator plate comprises
a central portion (31) providing: i) a comparatively recessed bottom face (32) comprising a first cell support area (33) configured for receiving the solid electrochemical cell (20), and ii) an outward face (34), opposite the recessed bottom face (32), comprising a second cell support area (35) configured for contacting the solid electrochemical cell of the first adjacent cell unit (10-1), and
a border central portion (31) providing a comparatively raised top face (37) and an upstanding sidewall (38) circumferentially extending from the recessed bottom face (32),
wherein the seal element (40) is configured for extending between the raised top face (37) of the border portion and a recessed bottom face of the border portion of the electrically conductive separator plate of the second adjacent cell unit (10-2), and wherein
the seal element (40) and the upstanding sidewall (38) are configured provide a separation distance between the first cell support area of the separator plate and the second cell support of the second adjacent separator plate (35-2) that matches a thickness of the solid electrochemical cell (20).

13. A method of manufacturing the separator plate as defined in any of claims 1-12, the method comprising
machining a central portion of an essentially planar metal base plate to forming the recessed bottom face configured to receive a solid electrochemical cell,
leaving a comparatively raised border portion (36) around the central portion.

14. The method according to claim 13, further comprising providing a first structure of grooves (55-1) in the recessed bottom face (32) forming a first channel structure (51) extending between a first pair of apertures provided in the border portion (36), and providing a second structure of grooves (57) formed in an outward face (34) of the separator plate (30), opposite the recessed bottom face (32), forming a second channel structure (52) extending between a second pair of apertures (54-1,54-2) provided in the border portion (36).

15. A use (200) the electrochemical stack or device according to any of the preceding claims 1-11 for the generation electrical power (SOFC) or for the manufacture of hydrogen, syngas, and/or carbon monoxide (SOEC).
